# EUROPEAN PATENT SPECIFICATION

(11) **EP 2 924 922 B1**
(45) Date of publication and mention of the grant of the patent: **25.03.2020**
(21) Application number: 15156795.5
(22) Date of filing: 26.02.2015
(51) Int. Cl.: H04L 12/28

(54) **System, computer program, terminal and method for obtaining content thereof**
System, Computerprogramm, Endgerät und Verfahren zum Erhalt von Inhalt dafür
Système, programme informatique, terminal et procédé permettant d'obtenir un contenu associé

(30) Priority: 28.02.2014 KR 20140024082
(43) Date of publication of application: 30.09.2015
(73) Proprietor: Humax Co., Ltd., Yongin-si 449-934 (KR)
(72) Inventor: Kim, Dong Hwan, 138-866 Seoul (KR)
(74) Representative: Zardi, Marco

(56) References cited:
- US-A1- 2009 215 416

## Description

### BACKGROUND

Exemplary embodiments of the present invention relate to a terminal, and more particularly, to a terminal for sending and receiving content to and from terminals over a Digital Living Network Alliance (DLNA) network and a method for obtaining content thereof.

In general, a variety of types of devices, such as broadcasting devices including Personal Computers (PC), smart phones, smart tablets, and smart TV, and AV devices including Digital Video Disc (DVD) players and smart cameras, are being used in a home. Home automation is used in order to automatically control such devices.

In early home automation, the home appliances were separately controlled using a telephone or infrared rays. That is, in the early home automation, the home appliances were not associated with each other.

As communication technologies are recently developed, a method of constructing a network between home appliances and integrating and managing the home appliances using a controller for controlling the network is being used. A system for integrating and managing home appliances over a constructed network as described above is called a home network system.

The home network system connects a variety of types of network home appliances (e.g., TV, a washing machine, a micro-oven, a gas stove, an audio system, an air conditioner, and a boiler, etc.), lighting, a gas valve, a front door, etc. to a controller, such as a home gateway or a home server, and controls such devices through a specific terminal (e.g., a remote controller, hereinafter referred to as a "remocon").

Recently, the standardization of such a home network system is in progress. In particular, Digital Living Network Alliance (DNLA), that is, a standard for controlling information home appliances (e.g., TV, VTR, a digital camera, and an audio system, etc.) within a home, is emerging.

The DLNA is the post-standard organization of the existing Digital Home Working Group (DHWG) and was established on June, 2003 by Microsoft, IBM, Hewlett-Packard, Intel, Sony and Matsushita of Japan, Samsung Electronics of Korea, etc.

In particular, the DLNA aims at sharing all pieces of content provided by information home appliances (e.g., TV, VCR, a digital camera, and an audio system, etc.) within a home. For example, the DLNA is for enabling users to conveniently enjoy pieces of digital media content irrespective of locations and devices within homes in such a manner that lots of pieces of digital media content (e.g., photos, music, and moving images, etc.) stored in devices of person areas, such as mobile devices or PCs, are shared between devices within homes.

To this end, the DLNA places emphasis on solving compatibility between devices. That is, in the DLNA, standard tasks, such as physical media, network transport, a media format, a streaming protocol, and Digital Right Management (DRM), are in progress based on a Universal Plug and Play (UPnP) technology.

The DLNA is described in more detail below. First, network connection in the DLNA is based on an Internet Protocol (IP). An IP is a basic network communication protocol for a device that operates on the Internet and enables pieces of information to be exchanged in a transparent way between applications executed in various media.

Accordingly, all DLNA devices are able to communicate with other devices connected to the Internet anywhere in the world. For example, a PC or a Set-Top Box (STB) on which DLNA middleware is mounted can send media content to TV in a living room wirelessly through the 802.11 Access Point (AP) connected to an Ethernet cable.
Furthermore, wired high-speed Ethernet (802.11u) and wireless Ethernet (802.11 a/b/g) are used as the physical layer of the DLNA. The stability of the wired Ethernet has already been established. The wireless Ethernet has adopted Wi-Fi due to an increase in wireless home network communication.
Furthermore, a technology for discovering and controlling a device within a DLNA network includes automatically configuring network setting, such as an IP address, and enabling other devices within the DLNA network to be recognized and managed. The technology is based on the existing UPnP AV architecture and UPnP device architecture. The same is true of a technology for discovering and controlling service within a DLNA network.
As described above, a user can connect his or her device to a DLNA network and use content streaming, transmitted by a content server connected to the DLNA network, through the device. However, there is a problem in that a user has to perform many setting processes in order to use content streaming, being used in a first device, in a second device without a change.
US 2009/0215416 A1 discloses a method for providing information about broadcasted content.

### SUMMARY

The present invention is defined in the independent claims.
An embodiment of the present invention relates to a terminal configured to request information about content, streamed from a content server to an external device connected to the same network as that of the terminal, receive the information about the content from the external device, request the content from the content server using the received content information, and a method for obtaining the requested content from the content server.

Another embodiment of the present invention relates to a terminal configured to request information about content that is being played back by an external device from the external device connected to the same network as that of the terminal, receive the requested information, and request the content from the external device using the received content information, and a method for obtaining the content.

In one embodiment, a method for obtaining a content by a terminal according to the present invention includes searching for at least one external device and a content server connected to a network over which content is streamed from the content server to the external device, requesting information about the content that is being streamed to the external device and played back by the external device, receiving the information about the content from the external device and requesting the content server to stream the content, and receiving the content being streamed from the content server based on the information about the content and playing back the content being streamed.

In one embodiment, a terminal according to the present invention includes an output unit configured to play back content, a wireless communication unit configured to access a network to which at least one external device and a content server configured to stream the content to the external device are connected, and a control unit configured to search for the external device and the content server connected to the network through the wireless communication unit, request information about the content that is being streamed to the external device and played back by the external device, receive the information about the content from the external device, request the content server to stream the content, receive the content being streamed from the content server, and play back the content being streamed through the output unit.

In another embodiment, a method for obtaining a content by a terminal includes accessing a network to which at least one external device is connected, searching for the external device connected to the network, requesting information about content being played back by the external device from the external device, requesting the external device to stream the content using the information about the content when the information about the content is received from the external device, receiving the content being streamed from the external device based on the information about the content, and playing back the content being streamed.

In another embodiment, a terminal according to the present invention includes an output unit configured to play back content, a wireless communication unit configured to access a network to which at least one external device that is playing back content is connected, and a control unit configured to search for the external device connected to the network through the wireless communication unit, request information about the content being played back by the external device from the external device, request the external device to stream the content using the information about the content when the information about the content is received from the external device, receive the content being streamed from the external device based on the information about the content, and play back the content being streamed through the output unit.

### BRIEF DESCRIPTION OF THE DRAWINGS

The above and other aspects, features and other advantages will be more clearly understood from the following detailed description taken in conjunction with the accompanying drawings, in which:
FIG. 1 is a block diagram of a terminal in accordance with an embodiment of the present invention;
FIG. 2 is a signal processing diagram illustrating a method for obtaining a content by the terminal in accordance with a first embodiment of the present invention;
FIG. 3 is a signal processing diagram illustrating a method for obtaining a content by the terminal in accordance with a second embodiment of the present invention; and
FIG. 4 is a signal processing diagram illustrating a method for obtaining content by the terminal in accordance with a third embodiment of the present invention.

### DESCRIPTION OF SPECIFIC EMBODIMENTS

The details of other embodiments are included in the detailed description and the drawings. The merits and characteristics of the present invention and a method for achieving them will become apparent from embodiments described in detail in conjunction with the accompanying drawings.

However, the present invention is not limited to the disclosed embodiments, but may be implemented in various other ways. The embodiments are provided to only complete the disclosure of the present invention and to allow those skilled in the art to which the present invention pertains to fully understand the category of the present invention. The present invention is defined by the category of the claims. The same reference numbers are used to refer to the same or similar parts throughout the present description.

Exemplary embodiments of the present invention are described in detail below with reference to the accompanying drawings.

Hereinafter, a terminal related to the present invention is described in more detail with reference to the accompanying drawings. It is to be noted that the suffixes of elements used in the following description, such as "module" and "unit," are assigned or interchangeable with each other by taking into consideration only the easiness of writing this specification, but in themselves are not particularly given distinct meanings and roles.

At least one external device 200 and terminal 100 described in this specification may include a handheld phone, a smart phone, a smart tablet, smart TV, a set-top box, IP TV, smart home appliances, a laptop computer, a terminal for digital broadcasting, Personal Digital Assistants (PDA), a Portable Multimedia Player (PMP), a navigator, and so on.

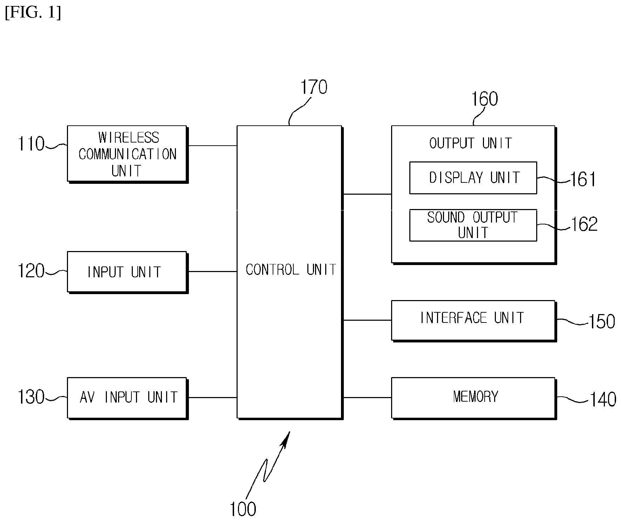

FIG. 1 is a block diagram of a terminal in accordance with an embodiment of the present invention.

Referring to FIG. 1, the terminal 100 may include a wireless communication unit 110, an input unit 120, an Audio/Video (AV) input unit 130, memory 140, an interface unit 150, an output unit 160, and a control unit 170. It is to be noted that the elements illustrated in FIG. 1 are not indispensable and the terminal may include larger or fewer elements than the aforementioned elements.

The elements are described below.

The wireless communication unit 110 may include one or more modules configured to enable wireless communication between the terminal 100 and a wireless communication system or between the terminal 100 and a DLNA network to which the terminal 100 is connected. For example, the wireless communication unit 110 may include a broadcasting reception module (not illustrated), a mobile communication module (not illustrated), a wireless Internet module (not illustrated), and a short range communication module (not illustrated).

Furthermore, the wireless communication unit 110 may perform multicasting searching on all the devices connected to the DLNA network and output the retrieved results to the control unit 170 under the control of the control unit 170. Furthermore, the wireless communication unit 110 performs communication related to the acquisition of content in accordance with an embodiment of the present invention with the retrieved devices 200 and 300 under the control of the control unit 170. That is, the wireless communication unit 110 requests the streaming of content from the content server 300 or the external device 200 and receives the content in accordance with an embodiment of the present invention.

The broadcasting reception module receives a broadcasting signal and/or broadcasting-related information, including a real-time or recorded broadcasting program, from an external broadcasting center 400 through a broadcasting channel.

The broadcasting channel may include a satellite channel and a terrestrial channel. The broadcasting center 400 may mean a server configured to generate and send a broadcasting signal and/or broadcasting-related information or a server configured to receive a previously generated broadcasting signal and/or broadcasting-related information and to provide the generated broadcasting signal and/or broadcasting-related information to the external device 200 or the terminal 100. The broadcasting signal includes a TV broadcasting signal, a radio broadcasting signal, and a data broadcasting signal and may also include a broadcasting signal in which a data broadcasting signal is combined with a TV broadcasting signal or a radio broadcasting signal.

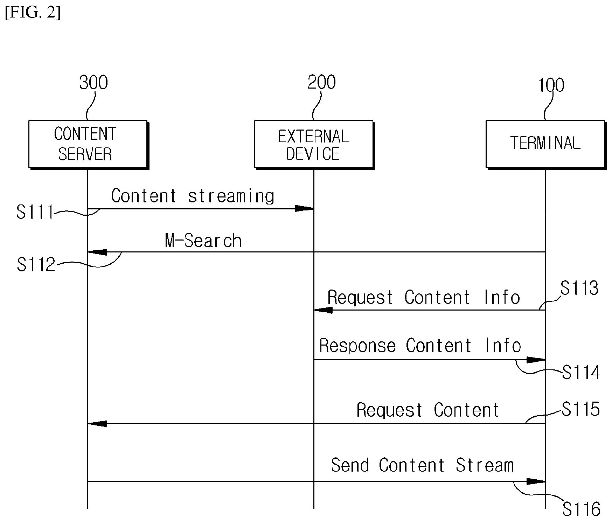

The broadcasting center 400 may include the content server 300 described with reference to FIGS. 2 to 4, and the content server 300 may function as the broadcasting center 400.

The broadcasting-related information may mean information related to a broadcasting channel, a broadcasting program, or a broadcasting service provider. The broadcasting-related information may also be provided over a mobile communication network. In such a case, the broadcasting-related information may be received by the mobile communication module.

The broadcasting-related information may have various forms. For example, the broadcasting-related information may be present in a form, such as Electronic Program Guide (EPG) of Digital Multimedia Broadcasting (DMB) or Electronic Service Guide (ESG) of Digital Video Broadcast-Handheld (DVB-H).

The mobile communication module performs communication related to the acquisition of content in accordance with an embodiment of the present invention with the retrieved devices 200 and 300 over a mobile communication network under the control of the control unit 170. That is, the mobile communication module requests the streaming of content from the content server 300 or the external device 200 and receives the content in accordance with an embodiment of the present invention.

The wireless Internet module performs communication related to the acquisition of content in accordance with an embodiment of the present invention with the retrieved devices 200 and 300 over a wireless Internet network under the control of the control unit 170. That is, the wireless Internet module requests the streaming of content from the content server 300 or the external device 200 and receives the content in accordance with an embodiment of the present invention.

A Wireless LAN (WLAN) (i.e., Wi-Fi), Wireless broadband (Wibro), World Interoperability for Microwave Access (Wimax), High Speed Downlink Packet Access (HSDPA), and Long Term Evolution (LTE) may be used as the wireless Internet technology.

The short range communication module performs communication related to the acquisition of content in accordance with an embodiment of the present invention with the retrieved devices 200 and 300 over a short range communication network under the control of the control unit 170. That is, the short range communication module requests the streaming of content from the content server 300 or the external device 200 and receives the content in accordance with an embodiment of the present invention. Bluetooth, Radio Frequency Identification (RFID), Infrared Data Association (IrDA), Ultra Wideband (UWB), and ZigBee may be used as a short range communication technology.

The input unit 120 generates input data for controlling, by a user, the operations of the terminal 100. For example, the input unit 120 may include a key pad dome switch, a touch pad (e.g., a capacitive/resistive touch pad), a Jog wheel, a Jog switch or the like.

The AV input unit 130 is for inputting an audio signal or a video signal and may include a camera and a microphone. The camera processes image frames, such as still images or moving images obtained by an image sensor in video conference mode or photographing mode. The processed images frame may be displayed on a display unit 161.

The image frames processed by the camera may be stored in the memory 140 or may be externally transmitted through the wireless communication unit 110. Two or more cameras may be included in the AV input unit 130 depending on the user environment.

The microphone receives an external sound signal in call mode, recording mode, or voice recognition mode and processes the received sound signal into electrical voice data. In call mode, the processed voice data may be converted into a form that may be transmitted to a mobile communication base station through the mobile communication module and then output. Various noise removal algorithms for removing noise generated in a process of receiving an external sound signal may be implemented in the microphone.

The memory 140 may store a program for processing and controlling the control unit 170 and may function to temporarily store input/output or transmitted/received data (e.g., a telephone directory, messages, audio, still images, moving images, and live content streaming).

The memory 140 may include at least one type of several types of storage media, including a flash memory type, a hard disk type, a multimedia card micro type, card type memory (e.g., SD or XD memory), Random Access Memory (RAM), Static Random Access Memory (SRAM), Read-Only Memory (ROM), Electrically Erasable Programmable Read-Only Memory (EEPROM), Programmable Read-Only Memory (PROM), magnetic memory, a magnetic disk, and an optical disk.

The interface unit 150 functions as a passage to all the external devices connected to the terminal 100. The interface unit 150 receives data or is supplied with power from an external device and transfers the power to the elements of the terminal 100 or enables data within the terminal 100 to be transmitted to an external device. For example, the interface unit 170 may include a wired/wireless headset port, an external charger port, a wired/wireless data port, a memory card port, a port for connection to a device equipped with an identification module, an audio Input/Output (I/O) port, a video I/O port, and an earphone port.

The output unit 160 functions to generate output related to a sense of sight and an auditory sense and may include the display unit 161 and a sound output unit 162.

The display unit 161 displays (or outputs) information processed by the terminal 100. For example, if the terminal 100 is in call mode, the display unit 161 displays a User Interface (UI) or a Graphic User Interface (GUI) related to a call. If the terminal 100 is in content playback mode, the display unit 161 displays the playback screen of content that is played back.

The display unit 161 may include at least one of a touch screen, a Liquid Crystal Display (LCD), a Thin Film Transistor-Liquid Crystal Display (TFT LCD), an Organic Light-Emitting Diode (OLED), a flexible display, a 3D display, and a TOLED.

The sound output unit 161 may output audio data that is received from the wireless communication unit 110 or stored in the memory 160 when a call signal is received, in call mode, in recording mode, in voice recognition mode, in broadcasting reception mode, and/or in content playback mode. The sound output unit 162 may output a sound signal related to a function (e.g., the ring tone of an incoming call or the ring tone of a received message) performed by the mobile terminal 100. The sound output unit 162 may include a receiver, a speaker, and a buzzer.

In general, the control unit 170 controls an overall operation of the terminal 100. For example, the control unit 170 performs control and processing related to a voice call, data communication, a video call, and content playback.

A power supply unit (not illustrated) is supplied with external power and internal power and supplies power required for the operations of the elements under the control of the control unit 170.

Various embodiments described herein may be implemented in a recording medium readable by a computer or similar device using software, hardware, or a combination of them, for example.

According to a hardware implementation, an embodiment described herein may be implemented using at least one of Application-Specific Integrated Circuits (ASICs), Digital Signal Processors (DSPs), Digital Signal Processing Devices (DSPDs), Programmable Logic Devices (PLDs), Field Programmable Gate Arrays (FPGAs), processors, controllers, microcontrollers, microprocessors, and other electrical units for executing functions. In some cases, the embodiments described in this specification may be implemented in the control unit 170 itself.

According to a software implementation, embodiments, such as procedures or functions described in this specification, may be implemented in the form of separate software modules. Each of the software modules may perform one or more functions and operations described in this specification. Software code may be implemented in the form of a software application written in a proper program language. The software code may be stored in the memory 140 and executed by the control unit 170.

Embodiments of the present invention are described in detail below with reference to FIGS. 2 to 4.

### [First embodiment]

The first embodiment of the present invention illustrates a process in which the terminal 100 requests information about content, streamed from the content server 300 to the external device 200 connected to the same DLNA network as that of the terminal 100, receives the information about the content from the external device 200, requests the content from the content server 300 using the received content information, and obtains the requested content from the content server 300.

The first embodiment of the present invention is described in detail below with reference to FIG. 2.

FIG. 2 is a signal processing diagram illustrating a method of obtaining, by the terminal, content in accordance with the first embodiment of the present invention.

Referring to FIG. 2, the content server 300 and the external device 200 are connected to a DLNA network, and the content server 300 streams content from the external device 200 at step S111. In this state, when a command to access the DLNA network and a device search command are received from a user through the input unit 120 or the display unit 161 of a touch screen type, the control unit 170 of the terminal 100 accesses the DLNA network through the wireless communication unit 110 and performs a multicasting searching operation for searching for all the devices connected to the DLNA network at step S112.

The content that is being streamed from the content server 300 to the external device 200 may be a multimedia including at least one of a moving image, music, and broadcasting.

If, as a result of the search, at least one external device 200 is searched for, the control unit 170 generates a signal to request information about the content that is streamed to the external device 200 and played back and sends the generated request signal to the external device 200 through the wireless communication unit 110 at step S113.

In this case, if, as a result of the search, the number of external devices that access the DLNA network and play back the content being streamed from the content server 300 is two or more, the control unit 170 may display a list including objects corresponding to the external devices and request, from any one external device 200 selected from the list, information about content being streamed to the selected external device. In this case, the objects may include names, icons, and device information indicative of the retrieved external devices, and content names and content types being played back by the external devices, etc. For example, two or more external devices in the list may receive different content being streamed from the content server 300 and play back the different content being streamed. In this case, the terminal 100 may select a external device which is playing back desired content among the retrieved external devices in the list, and the control unit 170 may request information about the desired content from the selected external device. By this configuration, the present disclosure has the advantage that the terminal 100 may receive desired content being streamed to an external device according to a user selection, content preference, etc. by selecting an external device which is playing back the desired content among a plurality of external devices retrieved in the network.

The content information may include at least one of information about the Uniform Resource Identifier (URI) of the content server 300 that provides the streaming of the content, information about the playback time of content that was streamed to the external device and played back at the time that the information about the content was requested, and information about an application that is installed in the external device 200 and that provides a function for streaming and playing back the content.

When the request signal is received from the terminal 100, the external device 200 checks at least one of information about the URI of the content server 300 that provides the streaming of the content, information about the playback time of the content that was streamed to the external device and played back at the time that the information about the content was requested, and information about an application that is installed in the external device 200 and that provides a function for streaming and playing back the content as information about the content being streamed from the content server 300.

Furthermore, the external device 200 sends the checked information to the terminal 100.

When the information about the content is received as a response to the request signal from the external device 200 through the wireless communication unit 110 at step S114, the control unit 170 generates a signal that requests the streaming of the content from the content server 300 using the received content information, sends the generated streaming request signal to the content server 300 through the wireless communication unit 110 at step S115, receives content, corresponding to the request signal, being streamed from the content server 300, and plays back the content, being streamed, through the output unit 160 at step S116.

That is, the control unit 170 may send the streaming request signal, including the information about the playback time of the content received from the external device 200, to the content server 300 so that the content server 300 streams content starting from a part that was streamed to the external device 200 at the time that the information about the content was requested based on the information about the playback time of the content.

When the content server 300 streams the content corresponding to the request signal, the control unit 170 accesses the received URI of the content server 300, receives the content being streamed, and plays back the content being streamed.

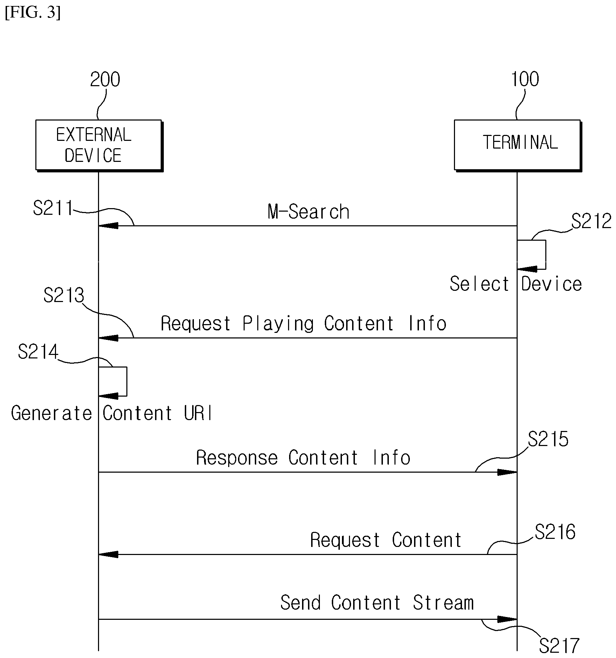

A second embodiment of the present invention is described below with reference to FIG. 3.

### [Second embodiment]

The second embodiment of the present invention illustrates a process in which the terminal 100 requests information about content being played back by the external device 200, connected to the same DLNA network as that of the terminal 100, from the external device 200, receives the requested information from the external device 200, requests the content from the external device 100 using the received content information, and receives the content.

The second embodiment of the present invention is described in detail below with reference to FIG. 3.

FIG. 3 is a signal processing diagram illustrating a method of obtaining, by the terminal, content in accordance with the second embodiment of the present invention.

Referring to FIG. 3, the external device 200 accesses a DLNA network and plays back content. In this state, when a command to access the DLNA network and a device search command is received from a user through the input unit 120 or the display unit 161 of a touch screen type, the control unit 170 of the terminal 100 accesses the DLNA network through the wireless communication unit 110 and performs a multicasting searching operation for searching for all the devices connected to the DLNA network at step S211.

In this case, the content being played back by the external device 200 may be multimedia including at least one of a moving image, music, and broadcasting.

If, as a result of the search, the number of external devices that access the DLNA network and play back content is two or more, the control unit 170 displays a list, including objects corresponding to the external devices, on the display unit 161. When any one external device 200 is selected from the list at step S212, the control unit 170 generates a signal to request information about content that is being played back by the selected external device 200 and sends the generated request signal to the external device 200 through the wireless communication unit 110 at step S213.

In this case, the objects may include names, icons, and device information indicative of the retrieved external devices.

Furthermore, the information about the content may include at least one of information about a URI that is generated by the external device 200 in order to stream the content being played back to the terminal 100, information about the playback time of content played back by the external device at the time that the information about the content was requested, and information about an application that is installed in the external device 200 and that provides a function for streaming and playing back the content.

In this case, when the request signal is received from the terminal 100, the external device 200 checks at least one of the information about the URI, the information about the playback time of the content, and the information about the application as information about content now being played back.

Furthermore, the external device 200 generates the URI in order to stream the content being played back to the terminal 100 at step S214 and sends the checked information to the terminal 100.

When the information about the content is received as a response to the request signal from the external device 200 through the wireless communication unit 110 at step S215, the control unit 170 generates a signal that requests the streaming of the content from the external device 200 using the received content information, sends the generated streaming request signal to the external device 200 through the wireless communication unit 110 at step S216, receives content, corresponding to the request signal, being streamed from the external device 200 through the received URI, and plays back the content, being streamed, through the output unit 160 at step S217.

That is, the control unit 170 sends the streaming request signal, including the information about the playback time of the content received from the external device 200, to the external device 300 so that the external device 200 streams content to the terminal 100 through the generated URI starting from a part that was played back by the external device 200 at the time that the information about the content was requested based on the information about the playback time of the content.

When the external device 200 streams the content corresponding to the request signal to the terminal 100 through the URI, the control unit 170 accesses the URI of the external device 200, receives the content being streamed, and plays back the content being streamed.

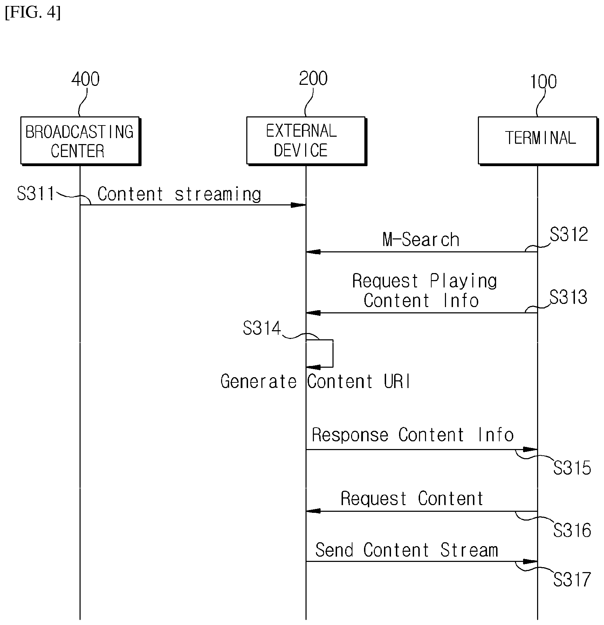

The third embodiment of the present invention is described below with reference to FIG. 4.

### [Third embodiment]

The third embodiment of the present invention illustrates a process in which the terminal 100 requests information about broadcasting content, streamed from the broadcasting center 400 to the external device 200 connected to the same DLNA network as that of the terminal 100, from the external device 200, receives the information about the broadcasting content, requests the broadcasting content from the external device 200 using the received content information, and obtains the requested broadcasting content.

FIG. 4 is a signal processing diagram illustrating a method of obtaining, by the terminal, content in accordance with the third embodiment of the present invention.

Referring to FIG. 4, the external device 200 accesses a DLNA network, streams broadcasting content from the broadcasting center 400 not connected to the DLNA network, and plays back the broadcasting content being streamed at step S311. In this state, when a command to access the DLNA network and a device search command is received from a user through the input unit 120 or the display unit 161 of a touch screen type, the control unit 170 of the terminal 100 accesses the DLNA network through the wireless communication unit 110 and performs a multicasting searching operation for searching for all the devices connected to the DLNA network at step S312.

In this case, the broadcasting content being played back by the external device 200 may include multimedia including at least one of a real-time broadcasting program, a replay broadcasting program, and a Video-On Demand (VoD).

In this case, if, as a result of the search, the number of external devices that access the DLNA network and play back the broadcasting content being streamed from the broadcasting center 400 is two or more, the control unit 170 displays a list, including objects corresponding to the external devices, on the display unit 161. When any one external device 200 is selected from the list, the control unit 170 generates a signal to request information about the broadcasting content being played back by the selected external device 200 and sends the generated request signal to the external device 200 through the wireless communication unit 110 at step S313. In this case, the objects may include names, icons, and device information indicative of the retrieved external devices, and content names and content types being played back by the external devices, etc.

Furthermore, the information about the broadcasting content may include at least one of information about a URI generated by the external device 200 in order to stream the broadcasting content being played back to the terminal 100, information about the playback time of broadcasting content that was played back by the external device at the time that the information about the broadcasting content was requested, and information about an application that is installed in the external device 200 and that provides a function for streaming and playing back the broadcasting content.

In this case, when the request signal is received from the terminal 100, the external device 200 checks at least one of the information about the URI, the information about the playback time of the broadcasting content, and the information about the application as the information about the broadcasting content that is being streamed from the broadcasting center 400 and played back.

Furthermore, the external device 200 generates a URI in order to stream the broadcasting content being played back to the terminal 100 at step S314 and sends the checked information about the broadcasting content to the terminal 100.

When the information about the broadcasting content is received as a response to the request signal from the external device 200 through the wireless communication unit 110 at step S315, the control unit 170 generates a signal that requests the streaming of the broadcasting content from the external device 200 using the received information about the broadcasting content, sends the generated streaming request signal to the external device 200 through the wireless communication unit 110 at step S316, receives broadcasting content, corresponding to the request signal, being streamed from the external device 200 through the received URI, and plays back the broadcasting content being streamed through the output unit 160 at step S317.

That is, the control unit 170 sends the streaming request signal, including the information about the playback time of the broadcasting content received from the external device 200, to the external device 300 so that the external device 200 streams the broadcasting content to the terminal 100 through the generated URI starting from a part that was streamed from the external device 200 and played back at the time that the information about the broadcasting content was requested based on the information about the playback time of the broadcasting content.

When the external device 200 streams broadcasting content, corresponding to the request signal, to the terminal 100 through the URI, the control unit 170 accesses the URI of the external device 200, receives the broadcasting content being streamed from the external device 200, and plays back the broadcasting content being streamed.

It is evident to those skilled in the art that the present invention may be materialized in other specific forms without departing from the scope of the present invention.

Furthermore, the present invention may be implemented in a medium on which a program has been recorded in the form of code readable by a computer. The computer-readable recording medium includes all types of storage devices in which data readable by a computer system is stored. The computer-readable recording medium includes, for example, ROM, RAM, CD-ROM, a magnetic tape, a floppy disk, and an optical data storage device and further includes media implemented in the form of carrier waves (e.g., transmission through the Internet). Furthermore, the computer may include the control unit 180 of the terminal.

Accordingly, the detailed description should not be construed as being limited from all aspects, but should be considered to be illustrative. The scope of the present invention should be determined by the attached claims, and all changes within the scope of the present invention are included in the scope of the present invention

The mobile terminal and the method of controlling the same described above are not limited and applied to the configurations and methods of the aforemtioned embodiments, and all or some of the embodiments may be selectively combined and configured so that the embodiments are modified in various ways, within the scope of the claims.

## Claims

1. A method for obtaining content by a terminal (100) comprising:
performing a multicast searching operation, by the terminal (100), for at least one external device (200) and a content server (300) connected to a network over which content is streamed from the content server (300) to the external device (S112), wherein the network is a DLNA, Digital Living Network Alliance, which is a standard for controlling home appliances within a home;
requesting, by the terminal (100) to the external device (200), information about the content that is being streamed and played back by the external device, as a result of the multicast searching operation (S113);
receiving, by the terminal (100) from the external device (200), the information about the content and requesting, by the terminal (100), the content server (300) to stream the content (S115) to the terminal (100);
accessing, by the terminal (100), a Uniform Resource Identifier, URI, of the content server (300); and
receiving, by the terminal(100), the content being streamed from the content server (300) based on the information about the content and playing back, by the terminal(100), the content being streamed (S116),
wherein the terminal (100) is connected to the DLNA network through a wireless communication unit (110),
wherein the information about the content includes information about the URI of the content server (300) through which the content is streamed.

2. The method of claim 1, wherein the information about the content further comprises
information about a playback time of the content that is streamed to the external device and played back at the time that the information about the content is requested.

3. The method of claim 2, wherein requesting the content server to stream the content comprises requesting the content server to stream the content starting from a part that is streamed to the external device at the time that the information about the content is requested based on the information about the playback time of the content.

4. The method of claim 2, wherein the information about the content further comprises information about an application installed in the external device and configured to provide a function for streaming and playing back the content.

5. The method of claim 1, further comprising displaying a list comprising objects corresponding to two or more external devices if, as a result of the multicast searching operation, a number of external devices connected to the network and configured to receive content being streamed from the content server and to play back the content being streamed is two or more,
wherein requesting the information about the content comprises requesting, from any one external device selected from the list, information about content being streamed to the selected external device.

6. A terminal (100), comprising:
an output unit (160) configured to play back content;
a wireless communication unit (110) configured to access a network to which at least one external device (200) and a content server (300) configured to stream the content to the external device (200) are connected, wherein the network is a DLNA, Digital Living Network Alliance, which is a standard for controlling home appliances within a home; and
a control unit (170) configured to:
- perform a multicast searching operation for the external device (200) and the content server (300) connected to the network through the wireless communication unit (110),
- request to the external device (200) information about the content that is being streamed to the external device (200) and played back by the external device, as a result of the multicast searching operation,
- receive the information about the content from the external device (200),
- request the content server (300) to stream the content,
- access a Uniform Resource Identifier, URI, of the content server (300),
- receive the content being streamed from the content server (300), and
- play back the content being streamed through the output unit (160),
wherein the information about the content includes information about the URI of the content server (300) through which the content is streamed.

7. The terminal of claim 6, wherein the information about the content further comprises
information about a playback time of the content that is streamed to the external device and played back at the time that the information about the content is requested.

8. The terminal of claim 7, wherein the control unit (170) is configured to request the content server to stream the content starting from a part that is streamed to the external device at the time that the information about the content is requested based on the information about the playback time of the content.

9. The terminal of claim 6, wherein the control unit (170) is configured to:
display a list, comprising objects corresponding to two or more external devices, on a screen of the output unit if, as a result of the multicast searching operation, a number of external devices connected to the network and configured to receive content being streamed from the content server and play back the content being streamed is two or more, and
request, from any one external device selected from the list, information about content being streamed to the selected external device.

10. A system, comprising a terminal according to any of claims 6-9, at least one external device (200), and a content server (300) configured to stream the content to the external device (200), and a network to which the at least one external device (200) and the content server (300) are connected.

11. The system according to claim 10, wherein the DLNA network is based on an IP protocol.

12. A computer program having program codes for performing the method of any one of claims 1 to 5 when being executed on a computer.

## Patentansprüche

1. Verfahren zum Erhalten eines Inhalts durch ein Endgerät (100) umfassend:
Durchführen einer Multicast-Suchoperation, durch das Endgerät (100), nach wenigstens einem externen Gerät (200) und einem Inhaltsserver (300), die mit einem Netzwerk verbunden sind, über das ein Inhalt von dem Inhaltsserver (300) zu dem externen Gerät gestreamt wird (S112), wobei das Netzwerk ein DLNA, Digital Living Network Alliance, ist, der ein Standard zum Steuern von Haushaltsgeräten innerhalb eines Haushalts ist;
Anfordern, durch das Endgerät (100) an das externe Gerät (200), von Informationen über den Inhalt, der durch das externe Gerät gestreamt und wiedergegeben wird, als Ergebnis der Multicast-Suchoperation (S113);
Empfangen, durch das Endgerät (100) von dem externen Gerät (200), der Informationen über den Inhalt und Auffordern, durch das Endgerät (100), des Inhaltsservers (300), den Inhalt zu dem Endgerät (100) zu streamen (S115);
Zugreifen, durch das Endgerät (100), auf einen Uniform Resource Identifier, URI, des Inhaltsservers (300); und
Empfangen, durch das Endgerät (100), des Inhalts, der gestreamt wird, von dem Inhaltsserver (300), basierend auf den Informationen über den Inhalt, und Wiedergeben, durch das Endgerät (100), des Inhalts, der gestreamt wird (S116),
wobei das Endgerät (100) durch eine Drahtloskommunikationseinheit (110) mit dem DLNA-Netzwerk verbunden ist,
wobei die Informationen über den Inhalt Informationen über den URI des Inhaltsservers (300) umfassen, durch den der Inhalt gestreamt wird.

2. Verfahren nach Anspruch 1, wobei die Informationen über den Inhalt ferner umfassen
Informationen über eine Wiedergabezeit des Inhalts, der zu dem Zeitpunkt, zu dem die Informationen über den Inhalt angefordert werden, zu dem externen Gerät gestreamt und wiedergegeben wird.

3. Verfahren nach Anspruch 2, wobei das Auffordern des Inhaltsservers, den Inhalt zu streamen, ein Auffordern des Inhaltsservers umfasst, den Inhalt beginnend von einem Teil zu streamen, der zu dem Zeitpunkt, zu dem die Informationen über den Inhalt angefordert werden, zu dem externen Gerät gestreamt wird, basierend auf den Informationen über die Wiedergabezeit des Inhalts.

4. Verfahren nach Anspruch 2, wobei die Informationen über den Inhalt ferner Informationen über eine Anwendung umfassen, die in dem externen Gerät installiert und dazu konfiguriert ist, eine Funktion zum Streamen und Wiedergeben des Inhalts bereitzustellen.

5. Verfahren nach Anspruch 1, ferner umfassend Anzeigen einer Liste umfassend Objekte, die zwei oder mehr externen Geräten entsprechen, falls als Ergebnis der Multicast-Suchoperation, eine Anzahl von externen Geräten, die mit den Netzwerk verbunden und dazu konfiguriert sind, einen Inhalt, der von dem Inhaltsserver gestreamt wird, zu empfangen und den Inhalt, der gestreamt wird, wiederzugeben, zwei oder mehr ist,
wobei das Anfordern der Informationen über den Inhalt ein Anfordern, von irgendeinem externen Gerät, das von der Liste ausgewählt wird, von Informationen über einen Inhalt umfasst, der zu dem ausgewählten externen Gerät gestreamt wird.

6. Endgerät (100), umfassend:
eine Ausgabeeinheit (160), die dazu konfiguriert ist, einen Inhalt wiederzugeben;
eine Drahtloskommunikationseinheit (110), die dazu konfiguriert ist, auf ein Netzwerk zuzugreifen, mit dem wenigstens ein externes Gerät (200) und ein Inhaltsserver (300) verbunden sind, der dazu konfiguriert ist, den Inhalt zu dem externen Gerät zu streamen, wobei das Netzwerk ein DLNA, Digital Living Network Alliance, ist, der ein Standard zum Steuern von Haushaltsgeräten innerhalb eines Haushalts ist; und
eine Steuereinheit (170), die dazu konfiguriert ist:
- eine Multicast-Suchoperation nach dem externen Gerät (200) und dem Inhaltsserver (300) durchzuführen, die mit dem Netzwerk durch die Drahtloskommunikationseinheit (110) verbunden sind,
- an das externe Gerät (200) Informationen über den Inhalt anzufordern, der zu dem externen Gerät (200) gestreamt und durch das externe Gerät wiedergegeben wird, als Ergebnis der Multicast-Suchoperation;
- die Informationen über den Inhalt von dem externen Gerät (200) zu empfangen,
den Inhaltsserver (300) aufzufordern, den Inhalt zu streamen,
- auf einen Uniform Resource Identifier, URI, des Inhaltsservers (300) zuzugreifen, und
- den Inhalt, der gestreamt wird, von dem Inhaltsserver (300) zu empfangen, und
- den Inhalt, der gestreamt wird, durch die Ausgabeeinheit (160) wiederzugeben,
wobei die Informationen über den Inhalt Informationen über den URI des Inhaltsservers (300) umfassen, durch den der Inhalt gestreamt wird.

7. Endgerät nach Anspruch 6, wobei die Informationen über den Inhalt ferner umfassen
Informationen über eine Wiedergabezeit des Inhalts, der zu dem Zeitpunkt, zu dem die Informationen über den Inhalt angefordert werden, zu dem externen Gerät gestreamt und wiedergegeben wird.

8. Endgerät nach Anspruch 7, wobei die Steuereinheit (170) dazu konfiguriert ist, den Inhaltsserver aufzufordern, den Inhalt beginnend von einem Teil zu streamen, der zu dem Zeitpunkt, zu dem die Informationen über den Inhalt angefordert werden, zu dem externen Gerät gestreamt wird, basierend auf den Informationen über die Wiedergabezeit des Inhalts.

9. Endgerät nach Anspruch 6, wobei die Steuereinheit (170) dazu konfiguriert ist:
eine Liste umfassend Objekte, die zwei oder mehr externen Geräten entsprechen, auf einem Bildschirm der Ausgabeeinheit anzuzeigen, falls als Ergebnis der Multicast-Suchoperation, eine Anzahl von externen Geräten, die mit den Netzwerk verbunden und dazu konfiguriert sind, einen Inhalt, der von dem Inhaltsserver gestreamt wird, zu empfangen und den Inhalt, der gestreamt wird, wiederzugeben, zwei oder mehr ist, und
von irgendeinem externen Gerät, das von der Liste ausgewählt wird, Informationen über einen Inhalt anzufordern, der zu dem ausgewählten externen Gerät gestreamt wird.

10. System, umfassend ein Endgerät nach einem der Ansprüche 6 - 9, wenigstens ein externes Gerät (200), und einen Inhaltsserver (300), der dazu konfiguriert ist, den Inhalt zu dem externen Gerät (200) zu streamen, und ein Netzwerk, mit dem das wenigstens eine externe Gerät (200) und der Inhaltsserver (300) verbunden sind.

11. System nach Anspruch 10, wobei das DLNA-Netwerk auf einen IP-Protokoll basiert ist.

12. Computerprogramm umfassend Programmcodes zum Durchführen des Verfahrens nach einem der Ansprüche 1 bis 5, wenn es auf einem Computer ausgeführt wird.

## Revendications

1. Procédé destiné à obtenir un contenu par un terminal (100), consistant à :
réaliser une opération de recherche de diffusion groupée, par le terminal (100), pour au moins un dispositif externe (200) et un serveur de contenu (300) connectés à un réseau sur lequel un contenu est transféré à partir du serveur de contenu (300) vers le dispositif externe (S112), dans lequel le réseau est une DLNA, Digital Living Network Alliance, qui est un standard destiné à contrôler des appareils ménagers au sein d'une habitation,
demander, par le terminal (100) au dispositif externe (200), des informations relatives au contenu qui est transféré et lu par le dispositif externe, suite à l'opération de recherche de diffusion groupée (S113),
recevoir, par le terminal (100) à partir du dispositif externe (200), les informations relatives au contenu et demander, par le terminal (100), que le serveur de contenu (300) transfère le contenu (S115) au terminal (100),
accéder, par le terminal (100), à une adresse URI, Uniform Resource Identifier, du serveur de contenu (300), et
recevoir, par le terminal (100), le contenu qui est transféré depuis le serveur de contenu (300) sur la base des informations relatives au contenu et lire, par le terminal (100), le contenu qui est transféré (S116),
dans lequel le terminal (100) est connecté au réseau DLNA par le biais d'une unité de communication sans fil (110),
dans lequel les informations relatives au contenu comprennent des informations relatives à l'adresse URI du serveur de contenu (300) par le biais duquel le contenu est transféré.

2. Procédé selon la revendication 1, **caractérisé en ce que** les informations relatives au contenu comportent en outre :
des informations relatives à un temps de lecture du contenu qui est transféré au dispositif externe et lu au moment où les informations relatives au contenu sont demandées.

3. Procédé selon la revendication 2, **caractérisé en ce que** la demande au serveur de contenu de transférer le contenu consiste à demander au serveur de contenu de transférer le contenu en commençant par une partie qui est transférée au dispositif externe au moment où les informations relatives au contenu sont demandées sur la base des informations relatives au temps de lecture du contenu.

4. Procédé selon la revendication 2, **caractérisé en ce que** les informations relatives au contenu comportent en outre des informations relatives à une application installée dans le dispositif externe et configurée pour fournir une fonction pour transférer et lire le contenu.

5. Procédé selon la revendication 1, consistant en outre à afficher une liste comportant des objets correspondant à deux dispositifs externes ou plus si, suite à l'opération de recherche de diffusion groupée, un nombre de dispositifs externes connectés au réseau et configurés pour recevoir un contenu qui est transféré à partir du serveur de contenu et pour lire le contenu qui est transféré est de deux ou plus,
dans lequel la demande des informations relatives au contenu consiste à demander, à partir d'un dispositif externe quelconque sélectionné à partir de la liste, des informations relatives au contenu qui est transféré au dispositif externe sélectionné.

6. Terminal (100), comportant :
une unité de sortie (160) configurée pour lire un contenu,
une unité de communication sans fil (110) configurée pour accéder à un réseau auquel au moins un dispositif externe (200) et un serveur de contenu (300) configuré pour transférer le contenu au dispositif externe (200) sont connectés, dans lequel le réseau est une DLNA, Digital Living Network Alliance, qui est un standard destiné à contrôler des appareils ménagers au sein d'une habitation, et
une unité de contrôle (170) configurée pour :
- réaliser une opération de recherche de diffusion groupée pour le dispositif externe (200) et le serveur de contenu (300) connectés au réseau par le biais de l'unité de communication sans fil (100),
- demander au dispositif externe (200) des informations relatives au contenu qui est transféré au dispositif externe (200) et lu par le dispositif externe, suite à l'opération de recherche de diffusion groupée,
- recevoir les informations relatives au contenu à partir du dispositif externe (200),
- demander au serveur de contenu (300) de transférer le contenu,
- accéder à une adresse URI, Uniform Resource Identifier, du serveur de contenu (300),
- recevoir le contenu qui est transféré à partir du serveur de contenu (300), et
- lire le contenu qui est transféré par le biais de l'unité de sortie (160),
dans lequel les informations relatives au contenu comprennent des informations relatives à l'adresse URI du serveur de contenu (300) par le biais duquel le contenu est transféré.

7. Terminal selon la revendication 6, **caractérisé en ce que** les informations relatives au contenu comportent en outre :
des informations relatives à un temps de lecture du contenu qui est transféré au dispositif externe et lu au moment où les informations relatives au contenu sont demandées.

8. Terminal selon la revendication 7, **caractérisé en ce que** l'unité de contrôle (170) est configurée pour demander au serveur de contenu de transférer le contenu en commençant par une partie qui est transférée au dispositif externe au moment où les informations relatives au contenu sont demandées sur la base des informations sur le temps de lecture du contenu.

9. Terminal selon la revendication 6, **caractérisé en ce que** l'unité de contrôle (170) est configurée pour :
afficher une liste, comportant des objets correspondant à deux dispositifs externes ou plus, sur un écran de l'unité de sortie si, suite à l'opération de recherche de diffusion groupée, un nombre de dispositifs externes connectés au réseau et configurés pour recevoir un contenu qui est transféré à partir du serveur de contenu et lire le contenu qui est transféré est de deux ou plus, et
demander, à partir d'un quelconque dispositif externe sélectionné à partir de la liste, des informations relatives au contenu qui est transféré au dispositif externe sélectionné.

10. Système, comportant un terminal selon une quelconque des revendications 6 à 9, au moins un dispositif externe (200), et un serveur de contenu (300) configuré pour transférer le contenu au dispositif externe (200), et un réseau auquel l'au moins un dispositif externe (200) et le serveur de contenu (300) sont connectés.

11. Système selon la revendication 10, **caractérisé en ce que** le réseau DLNA est basé sur un protocole IP.

12. Programme d'ordinateur présentant des codes de programme destinés à mettre en œuvre le procédé selon une quelconque des revendications 1 à 5 lorsqu'il est exécuté sur un ordinateur.
